# EUROPEAN PATENT APPLICATION

(11) **EP 4 403 389 A1**
(43) Date of publication of application: **24.07.2024**
(21) Application number: 22711428.7
(22) Date of filing: 21.01.2022
(51) Int. Cl.: B60H 1/00

(54) **AIR CONDITIONING SYSTEM AND VEHICLE PROVIDED WITH SAME**

(30) Priority: 15.09.2021 CN 202111081781
(71) Applicant: Shenzhen Cooltek Electric Vehicle Cooling Technology Co., Ltd., Shenzhen, Guangdong 518000 (CN)
(72) Inventor: HONG, Fengqi, Shenzhen, Guangdong 518000 (CN); LING, Bo, Shenzhen, Guangdong 518000 (CN)
(74) Representative: Ipside
(86) International application number: PCT/CN2022/073154
(87) International publication number: WO 2023/040160

(57) **Abstract**

An air conditioning system and a vehicle having the same are provided according to the present application. The air conditioning system includes: a compressor, an indoor heat exchanger, an outdoor heat exchanger and a first throttling element, where an outlet of the compressor is in communication with a first port of the indoor heat exchanger and an inlet of the compressor is in communication with a first port of the outdoor heat exchanger, a first port of the first throttling element is in communication with a second port of the indoor heat exchanger and a second port of the first throttling element is in communication with a second port of the outdoor heat exchanger; and a first heat exchanger, where the first heat exchanger includes a first passage and a second passage which are configured to perform heat exchange, an outlet of the first passage is connected to the inlet of the compressor, and an inlet of the first passage is in communication with the first port of the outdoor heat exchanger when the air conditioning system performs heating; the second passage is in communication with an antifreeze fluid pipeline, the anti-freeze pipeline can exchange heat with a battery, and a temperature of antifreeze fluid is lower than a temperature of the battery. The air conditioning system can effectively recover the heat of the battery when performs heating, which saves energy.

## Description

The present application claims the benefit of priority to Chinese patent application No. 202111081781.8, titled "AIR CONDITIONING SYSTEM AND VEHICLE HAVING THE SAME", filed with the China National Intellectual Property Administration on September 15, 2021, the entire disclosure of which is incorporated herein by reference.

### FIELD

The present application relates to the technical field of air conditioners, and in particular to an air conditioning system and a vehicle having the same.

### BACKGROUND

In the conventional technology, an air conditioning system of a vehicle generally includes a compressor, an outdoor heat exchanger, an indoor heat exchanger and a battery heat dissipater, the indoor heat exchanger is connected in parallel with the battery heat dissipater, so that thermal management of the vehicle body and the battery is realized while refrigerant circulates. However, when the air conditioner of the vehicle performs heating, the heat of the battery is directly dissipated into the environment and cannot be recovered, which results in energy waste.

### SUMMARY

In view of this, a first object of the present application is to provide an air conditioning system, which can effectively recover the heat of the battery when the air conditioning system performs heating, so as to save energy. A second object of the present application is to provide a vehicle including the air conditioning system.

In order to achieve the above first object, the following technical solutions are provided according to the present application.

An air conditioning system includes:
a compressor, an indoor heat exchanger, an outdoor heat exchanger and a first throttling element, where an outlet of the compressor is in communication with a first port of the indoor heat exchanger and an inlet of the compressor is in communication with a first port of the outdoor heat exchanger, a first port of the first throttling element is in communication with a second port of the indoor heat exchanger and a second port of the first throttling element is in communication with a second port of the outdoor heat exchanger; and
a first heat exchanger, where the first heat exchanger includes a first passage and a second passage which are configured to perform heat exchange, an outlet of the first passage is connected to the inlet of the compressor, and an inlet of the first passage is in communication with the first port of the outdoor heat exchanger when the air conditioning system performs heating; the second passage is in communication with an antifreeze fluid pipeline, the antifreeze fluid pipeline is configured to exchange heat with a battery, and a temperature of antifreeze fluid is lower than a temperature of the battery.

Preferably, the air conditioning system further includes a four-way valve, a first port of the four-way valve is in communication with the outlet of the compressor, a second port of the four-way valve is in communication with the inlet of the first passage, a third port of the four-way valve is in communication with the first port of the indoor heat exchanger, and a fourth port of the four-way valve is in communication with the first port of the outdoor heat exchanger;
when the air conditioning system performs heating, communication between the first port of the four-way valve and the third port of the four-way valve is allowed, and communication between the second port of the four-way valve and the fourth port of the four-way valve is allowed; and
when the air conditioning system performs cooling, communication between the first port of the four-way valve and the fourth port of the four-way valve is allowed, and communication between the second port of the four-way valve and the third port of the four-way valve is allowed.

Preferably, the air conditioning system further includes a second heat exchanger, the second heat exchanger includes a third passage and a fourth passage which are configured to perform heat exchange, two ends of the third passage are in communication with the third port of the four-way valve and the second port of the first throttling element, respectively; the fourth passage is connected in series with the second passage or the fourth passage is connected in parallel with the second passage.

Preferably, in the air conditioning system, the fourth passage is connected in series with the second passage, and the fourth passage is located downstream of the second passage.

Preferably, in the air conditioning system, the fourth passage is connected in parallel with the second passage, and the air conditioning system further includes a first flow valve connected in series with the fourth passage and/or a second flow valve connected in series with the second passage.

Preferably, in the air conditioning system, the second heat exchanger includes a coaxial heat exchanger or a plate heat exchanger.

Preferably, in the air conditioning system, the port of the third passage configured to be in communication with the second port of the first throttling element is connected in series with a second throttling element;
a first port of the second throttling element is in communication with the third passage, and a second port of the second throttling element is in communication with the second port of the first throttling element.

Preferably, the air conditioning system further includes a drying filter, the drying filter is arranged in a refrigerant pipeline connected between the second port of the first throttling element and the second port of the outdoor heat exchanger; and/or,
a gas-liquid separator is connected between the first passage and the inlet of the compressor in a series manner.

Preferably, in the air conditioning system, the first heat exchanger includes a coaxial heat exchanger, and an intake pipe of the compressor serves as part of a heat exchange pipe of the coaxial heat exchanger; or, the first heat exchanger includes a plate heat exchanger.

A vehicle includes the air conditioning system according to any one of the above solutions and the battery.

When the air conditioning system according to the above embodiments is in application, the indoor heat exchanger is located indoors and the outdoor heat exchanger is located outdoors. When indoor heating is performed, a low-temperature and low-pressure refrigerant gas is compressed to be in a high-temperature and high-pressure state after entering the compressor, the refrigerant flowing out of the compressor enters the indoor heat exchanger, the refrigerant releases heat in the indoor heat exchanger and is condensed into a liquid at normal-temperature and high-pressure, to perform heating indoors. The refrigerant flowing out of the indoor heat exchanger enters the first throttling element, the refrigerant flowing out of the first throttling element enters the outdoor heat exchanger, the refrigerant absorbs heat in the outdoor heat exchanger and is evaporated to be low-temperature and low-pressure gas, and the refrigerant flowing out of the outdoor heat exchanger flows back to the compressor via the first passage. In this working state, the antifreeze fluid absorbs the heat of the battery, and the low-temperature and low-pressure refrigerant in the first passage absorbs the heat of the antifreeze fluid, thus the heat of the battery is circulated to the indoor space by using the first heat exchanger, which not only improves the heating effect but also ensures the timely heat dissipation of the battery, thereby better saving the energy.

In order to achieve the second object, a vehicle is provided according to the present application, which includes the air conditioning system according to any one of the above solutions. Since the air conditioning system has the above technical effects, the vehicle having the air conditioning system also has corresponding technical effects.

### BRIEF DESCRIPTION OF THE DRAWINGS

For more clearly illustrating embodiments of the present application or the technical solutions in the conventional technology, drawings referred to describe the embodiments or the conventional technology will be briefly described hereinafter. Apparently, the drawings in the following description are only some examples of the present application, and for those skilled in the art, other drawings may be obtained based on these drawings without any creative efforts.
FIG. 1 is a schematic view of an air conditioning system provided according to an embodiment of the present application in a heating mode;
FIG. 2 is a schematic view of the air conditioning system provided according to the embodiment of the present application in a cooling mode;
FIG. 3 is a schematic view of an air conditioning system provided according to another embodiment of the present application; and
FIG. 4 is a schematic view of an air conditioning system provided according to yet another embodiment of the present application.

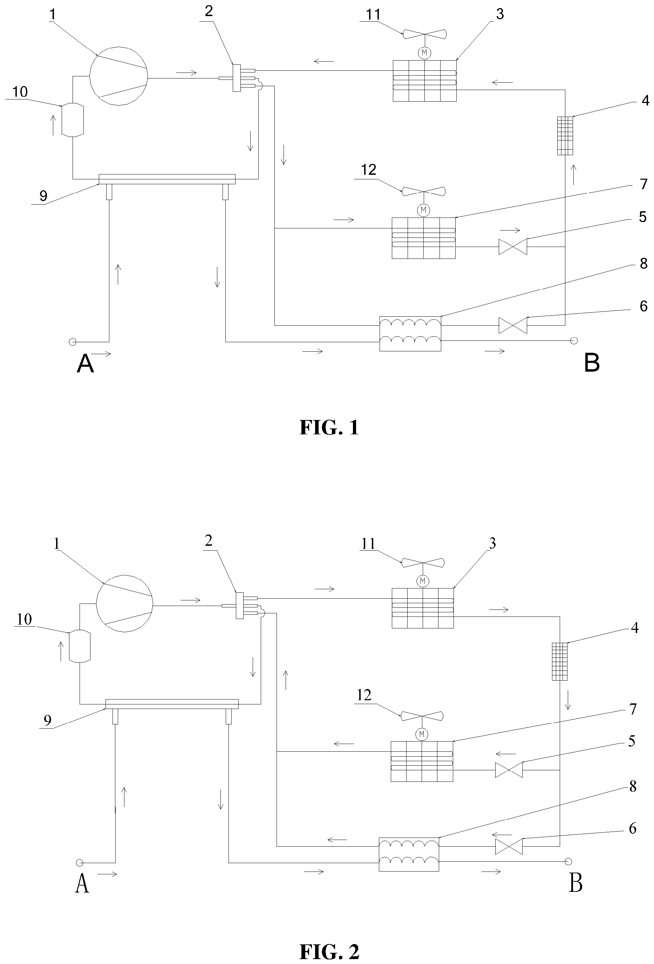

Reference numerals in FIGS. 1 to 4:

| | | | |
|---|---|---|---|
| 1 | compressor, | 2 | four-way valve, |
| 3 | outdoor heat exchanger, | 4 | drying filter, |
| 5 | first expansion valve, | 6 | second expansion valve, |
| 7 | indoor heat exchanger, | 8 | second heat exchanger, |
| 9 | first heat exchanger, | 10 | gas-liquid separator, |
| 11 | outdoor fan, | 12 | indoor fan, |
| 13 | first flow valve, | 14 | second flow valve. |

### DETAILED DESCRIPTION OF THE EMBODIMENTS

A first object according to the present application is to provide an air conditioning system, which can effectively recover the heat of a battery when the air conditioning system performs heating, to save energy. A second object according to the present application is to provide a vehicle including the air conditioning system.

Technical solutions according to the embodiments of the present application will be described clearly and completely as follows in conjunction with the accompany drawings in the embodiments of the present application. It is obvious that the described embodiments are only a part of the embodiments according to the present application, rather than all of the embodiments. All the other embodiments obtained by those skilled in the art based on the embodiments in the present application without any creative work belong to the scope of protection of the present application.

In the description of the present application, it should be noted that the orientation or positional relationships indicated by terms such as "up", "down", "front", "rear", "left", "right", and the like are based on the orientation or positional relationships shown in the drawings, and are merely for the convenience of describing the present application and the simplification of the description, and do not indicate or imply that the device or element referred to must have a particular orientation, or be configured and operated in a particular orientation, which therefore should not be construed as a limitation to the scope of the present application. In addition, terms such as "first", "second", and the like are merely for description, and should not be construed as indicating or implying relative importance.

Referring to FIG. 1 and FIG. 2, an air conditioning system according to the present application includes a compressor 1, an indoor heat exchanger 7, an outdoor heat exchanger 3, a first throttling element and a first heat exchanger 9. An outlet of the compressor 1 is in communication with a first port of the indoor heat exchanger 7, a second port of the indoor heat exchanger 7 is in communication with a first port of the first throttling element, a second port of the first throttling element is in communication with a second port of the outdoor heat exchanger 3, and a first port of the outdoor heat exchanger 3 is in communication with an inlet of the compressor 1. In this case, the air conditioning system is in a heating mode.

The first heat exchanger 9 includes a first passage and a second passage which are configured to perform heat exchange, an outlet of the first passage is connected to the inlet of the compressor 1, that is, a low-temperature and low-pressure refrigerant gas enters the compressor 1 via the first passage. The second passage is in communication with an antifreeze fluid pipeline, the antifreeze fluid pipeline is configured to exchange heat with a battery, and a temperature of antifreeze fluid is lower than a temperature of the battery. When the low-temperature and low-pressure refrigerant flows through the first passage, the refrigerant in the first passage exchanges heat with the antifreeze fluid in the second passage, and the anti-freeze fluid can exchange heat with the battery.

When the air conditioning system according to the above embodiment is in use, the indoor heat exchanger 7 is located indoors and the outdoor heat exchanger 3 is located outdoors. When indoor heating is performed, the low-temperature and low-pressure refrigerant gas is compressed to be in a high-temperature and high-pressure state after entering the compressor 1, the refrigerant flowing out of the compressor 1 enters the indoor heat exchanger 7, the refrigerant releases heat in the indoor heat exchanger 7 and is condensed into a liquid at normal-temperature and high-pressure, to perform heating indoors. The refrigerant flowing out of the indoor heat exchanger 7 enters the first throttling element, the refrigerant flowing out of the first throttling element enters the outdoor heat exchanger 3, the refrigerant absorbs heat in the outdoor heat exchanger 3 and is evaporated to be low-temperature and low-pressure gas, and the refrigerant flowing out of the outdoor heat exchanger 3 flows back to the compressor 1 via the first passage. In this working state, the antifreeze fluid absorbs the heat of the battery, and the low-temperature and low-pressure refrigerant in the first passage absorbs the heat of the antifreeze fluid, thus the heat of the battery is circulated to the indoor space by using the first heat exchanger 9, which not only improves the heating effect but also ensures the timely heat dissipation of the battery, thereby better saving the energy.

The air conditioning system further includes a four-way valve 2, a first port of the four-way valve 2 is in communication with the outlet of the compressor 1, a second port of the four-way valve 2 is in communication with an inlet of the first passage, a third port of the four-way valve 2 is in communication with the first port of the indoor heat exchanger 7, and a fourth port of the four-way valve 2 is in communication with the first port of the outdoor heat exchanger 3. When the air conditioning system performs heating, communication between the first port of the four-way valve 2 and the third port of the four-way valve 2 is allowed, and communication between the second port of the four-way valve 2 and the fourth port of the four-way valve 2 is allowed. When the air conditioning system performs cooling, communication between the first port of the four-way valve 2 and the fourth port of the four-way valve 2 is allowed, and communication between the second port of the four-way valve 2 and the third port of the four-way valve 2 is allowed. In this embodiment, switching between the heating mode and the cooling mode of the air conditioning system can be realized by using the four-way valve 2.

Further, the air conditioning system includes a second heat exchanger 8, and the second heat exchanger 8 includes a third passage and a fourth passage which are configured to perform heat exchange. Two ends of the third passage are in communication with the third port of the four-way valve 2 and the second port of the first throttling element 5, respectively. That is, the third passage is connected in parallel with the indoor heat exchanger 7 and the first throttling element, part of refrigerant flows through the indoor heat exchanger 7 and the first throttling element, and another part of refrigerant flows through the third passage. The fourth passage is connected in series with the second passage, or the fourth passage is connected in parallel with the second passage. In this way, when the refrigerant flows through the third passage, the refrigerant in the third passage exchanges heat with the antifreeze fluid in the fourth passage.

In the above embodiment, when the air conditioning system performs cooling, the refrigerant gas with normal-temperature and low-pressure enters the compressor 1 and is compressed to be in a high-temperature and high-pressure state, the refrigerant flowing out of the compressor 1 enters the outdoor heat exchanger 3 via the four-way valve 2, the refrigerant releases heat in the outdoor heat exchanger 3 and is condensed to be a liquid with normal-temperature and high-pressure. Part of the refrigerant flowing out of the outdoor heat exchanger 3 enters the indoor heat exchanger 7 to be evaporated for heat absorption, so as to perform indoor refrigeration; another part of the refrigerant flowing out of the outdoor heat exchanger 3 enters the third passage to be evaporated for heat absorption, so as to cool the antifreeze fluid, and the cooled antifreeze fluid absorbs heat of the battery, to cool the battery. The refrigerant flowing out of the indoor heat exchanger 7 and the third passage enters the compressor 1 via the four-way valve 2.

When the air conditioning system performs heating, the refrigerant gas with low-temperature and low-pressure enters the compressor 1 and is compressed to be in a high-temperature and high-pressure state, the refrigerant flowing out of the compressor 1 enters the indoor heat exchanger 7 via the four-way valve 2, the refrigerant releases heat in the indoor heat exchanger 7 and is condensed to be a liquid with normal-temperature and high-pressure, to perform indoor heating. The refrigerant flowing out of the indoor heat exchanger 7 enters the outdoor heat exchanger 3, the refrigerant absorbs heat in the outdoor heat exchanger 3 and is evaporated to be the gas with low-temperature and low-pressure, and the refrigerant flowing out of the outdoor heat exchanger 3 flows back to the compressor 1 via the four-way valve 2. In this working state, the refrigerant does not flow through the third passage, and the antifreeze fluid exchanges heat with the battery, to absorb the heat of the battery. The heat of the battery is circulated into the indoor space by the first heat exchanger 9, which realizes the recovery of the heat of the battery, thereby better saving the energy.

As shown in FIG. 2, in the above embodiment, the fourth passage is connected in series with the second passage, and the second passage may be located upstream of the fourth passage, to prevent the antifreeze fluid in the fourth passage from being cooled before performing heat exchange with the refrigerant to be introduces into the compressor 1, which avoids energy waste. Alternatively, the second passage may be located downstream of the fourth passage, which is not limited herein.

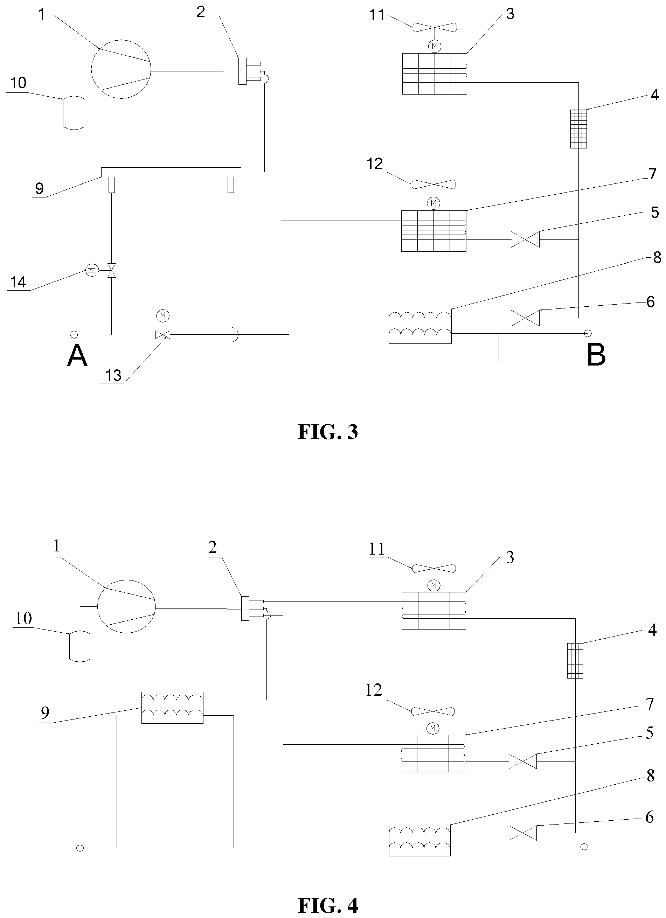

In addition, as shown in FIG. 3, the fourth passage is connected in parallel with the second passage, and the air conditioning system further includes a first flow valve 13 connected in series with the fourth passage and/or a second flow valve 14 connected in series with the second passage. Specifically, part of the antifreeze fluid flows through the fourth passage, another part of the antifreeze fluid flows through the second passage, a flow quantity of the coolant in the fourth passage and a flow quantity of the coolant in the second passage can be adjusted by controlling the first flow valve 13 and/or the second flow valve 14. When the air conditioning system performs cooling, a heat exchange amount of the second heat exchanger 8 is greater than that of the first heat exchanger 9, and the flow quantity in the fourth passage should be greater than the flow quantity in the third passage by controlling the first flow valve 13 and/or the second flow valve 14 at this time. When the air conditioning performs heating, the fourth passage may be directly blocked, and only the second passage permits flow.

The second heat exchanger 8 may include a coaxial heat exchanger or a plate heat exchanger. Of course, the second heat exchanger 8 may include other types of heat exchangers, which is not limited herein.

In another specific embodiment, the port of the third passage configured to be in communication with the second port of the first throttling element is connected in series with a second throttling element. The second throttling element is connected in series with the third passage, and there are no other members provided in a refrigerant pipeline between the second throttling element and the third passage. A first port of the second throttling element is in communication with the third passage, and a second port of the second throttling element is in communication with the second port of the first throttling element. In the heating mode of the air conditioning system, the second throttling element is shut off, and no refrigerant passes through the third passage. In the cooling mode of the air conditioning system, the second throttling element is opened, and the refrigerant passes through the third passage to cool the antifreeze fluid.

The first throttling element may be a first expansion valve 5, and the second throttling element may be a second expansion valve 6. Alternatively, the first throttling element and the second throttling element may be capillary tubes or other members, which is not limited herein.

Of course, the first throttling element and the second throttling element may be replaced with on-off valves, which is not limited herein.

Optionally, the air conditioning system may include a drying filter 4, the drying filter 4 is arranged in a refrigerant pipeline connected between the second port of the first throttling element and the second port of the outdoor heat exchanger 3, so as to dehumidify and filter the refrigerant by using the drying filter 4.

A gas-liquid separator 10 may be provided at the inlet of the compressor 1, to prevent the liquid refrigerant from entering the compressor 1 and affecting the operation of the compressor 1. The gas-liquid separator 10 may be arranged in a pipeline between the first passage and the inlet of the compressor 1 in a series manner.

In any one of the above embodiments, the first heat exchanger 9 may include a coaxial heat exchanger, and an intake pipe of the compressor 1 may serve as part of a heat exchange pipe of the coaxial heat exchanger, which simplifies the structure. Alternatively, as shown in FIG. 4, the first heat exchanger 9 may include a plate heat exchanger, or the first heat exchanger 9 may include other types of heat exchangers, which is not limited herein.

The air conditioning system may further include an indoor fan 12 connected to the indoor heat exchanger 7 and an outdoor fan 11 connected to the outdoor heat exchanger 3, so as to improve air motion, which improves heat exchange efficiency.

Based on the air conditioning according to the above embodiments, a vehicle is provided according to the present application, which includes a battery and the air conditioning system according to any one of the above embodiments. The battery is the battery of the vehicle, and the antifreeze fluid pipeline is the antifreeze fluid pipeline of the vehicle. Since the vehicle employs the air conditioning system according to the above embodiments, the beneficial effects of the vehicle may be referred to the above embodiments.

The above embodiments in this specification are described in a progressive manner. Each of the embodiments is mainly focused on describing its differences from other embodiments, and references may be made among these embodiments with respect to the same or similar portions among these embodiments.

Based on the above description of the disclosed embodiments, those skilled in the art are capable of carrying out or using the present application. It is obvious for those skilled in the art to make many modifications to these embodiments. The general principle defined herein may be applied to other embodiments without departing from the spirit or scope of the present application. Therefore, the present application is not limited to the embodiments illustrated herein, but should be defined by the broadest scope consistent with the principle and novel features disclosed herein.

## Claims

1. An air conditioning system, comprising:
a compressor (1), an indoor heat exchanger (7), an outdoor heat exchanger (3) and a first throttling element, wherein an outlet of the compressor (1) is in communication with a first port of the indoor heat exchanger (7) and an inlet of the compressor (1) is in communication with a first port of the outdoor heat exchanger (3), a first port of the first throttling element is in communication with a second port of the indoor heat exchanger (7) and a second port of the first throttling element is in communication with a second port of the outdoor heat exchanger (3); and
a first heat exchanger (9), wherein the first heat exchanger (9) comprises a first passage and a second passage which are configured to perform heat exchange, an outlet of the first passage is connected to the inlet of the compressor, and an inlet of the first passage is in communication with the first port of the outdoor heat exchanger (3) when the air conditioning system performs heating; the second passage is in communication with an antifreeze fluid pipeline, the antifreeze fluid pipeline is configured to exchange heat with a battery, and a temperature of antifreeze fluid is lower than a temperature of the battery.

2. The air conditioning system according to claim 1, further comprising a four-way valve (2), wherein a first port of the four-way valve (2) is in communication with the outlet of the compressor (1), a second port of the four-way valve (2) is in communication with the inlet of the first passage, a third port of the four-way valve (2) is in communication with the first port of the indoor heat exchanger (7), and a fourth port of the four-way valve (2) is in communication with the first port of the outdoor heat exchanger (3); and wherein
when the air conditioning system performs heating, communication between the first port of the four-way valve (2) and the third port of the four-way valve (2) is allowed, and communication between the second port of the four-way valve (2) and the fourth port of the four-way valve (2) is allowed; and
when the air conditioning system performs cooling, communication between the first port of the four-way valve (2) and the fourth port of the four-way valve (2) is allowed; and communication between the second port of the four-way valve (2) and the third port of the four-way valve (2) is allowed.

3. The air conditioning system according to claim 2, further comprising a second heat exchanger (8), wherein the second heat exchanger (8) comprises a third passage and a fourth passage which are configured to perform heat exchange, two ends of the third passage are in communication with the third port of the four-way valve (2) and the second port of the first throttling element (5), respectively; the fourth passage is connected in series with the second passage or the fourth passage is connected in parallel with the second passage.

4. The air conditioning system according to claim 3, wherein the fourth passage is connected in series with the second passage, and the fourth passage is located downstream of the second passage.

5. The air conditioning system according to claim 3, wherein the fourth passage is connected in parallel with the second passage, and the air conditioning system further comprises a first flow valve (13) connected in series with the fourth passage and/or a second flow valve (14) connected in series with the second passage.

6. The air conditioning system according to claim 3, wherein the second heat exchanger (8) comprises a coaxial heat exchanger or a plate heat exchanger.

7. The air conditioning system according to claim 1, wherein the port of the third passage configured to be in communication with the second port of the first throttling element is connected in series with a second throttling element; wherein
a first port of the second throttling element is in communication with the third passage, and a second port of the second throttling element is in communication with the second port of the first throttling element.

8. The air conditioning system according to claim 1, further comprising a drying filter (4), wherein the drying filter (4) is arranged in a refrigerant pipeline connected between the second port of the first throttling element and the second port of the outdoor heat exchanger (3); and/or,
a gas-liquid separator (10) is connected between the first passage and the inlet of the compressor (1) in a series manner.

9. The air conditioning system according to any one of claims 1 to 8, wherein the first heat exchanger (9) comprises a coaxial heat exchanger, and an intake pipe of the compressor (1) serves as part of a heat exchange pipe of the coaxial heat exchanger; or, the first heat exchanger (9) comprises a plate heat exchanger.

10. A vehicle, comprising the air conditioning system according to any one of claims 1 to 9 and the battery.
